Europäisches Patentamt

European Patent Office

Office européen des brevets

(19)

(11) **EP 0 945 205 A1**

(12) **EUROPÄISCHE PATENTANMELDUNG**

(43) Veröffentlichungstag:
29.09.1999  Patentblatt 1999/39

(51) Int. Cl.$^6$: **B23D 33/02**

(21) Anmeldenummer: 99105820.7

(22) Anmeldetag: 23.03.1999

(84) Benannte Vertragsstaaten:
**AT BE CH CY DE DK ES FI FR GB GR IE IT LI LU
MC NL PT SE**
Benannte Erstreckungsstaaten:
**AL LT LV MK RO SI**

(30) Priorität: 25.03.1998 DE 19812992

(71) Anmelder:
**SKET Walzwerkstechnik GmbH
39120 Magdeburg (DE)**

(72) Erfinder: **Krampitz, Michael
39108 Magdeburg (DE)**

(74) Vertreter: **Rayling, Burkhard
Rechtsanwalt,
August-Bebel-Strasse 33
39326 Wolmirstedt (DE)**

(54) **Verfahren und Vorrichtung zum Teilen einer Walzader und/oder Schneiden der Walzader in Gutader und Schrottstücke**

(57)   Die Erfindung betrifft ein Verfahren und eine Vorrichtung zum Teilen einer Walzader und/oder Schneiden der Walzader in Gutader und Schrottstücke durch Schopfen und/oder Häckseln, wobei sich die Walzader mit hoher Geschwindigkeit bis wenigstens 80 m/s bewegt.

Die Erfindung ist insbesondere dadurch gekennzeichnet, daß die Walzader (1) mittels einer senkrecht zur aktuellen Bewegungsrichtung wirkenden elektromagnetischen Kraft F derart kurzfristig und mit hoher Intensität ausgelenkt wird, daß die Walzader (1) entweder in den Wirkbereich zwischen zwei achsparallel zueinander angeordnete und gegensinnig rotierende und mit mindestens je einem Messer (3a; 3b) versehene Messerköpfe (2a; 2b) zum Schneiden der Walzader (1) oder aus dem Wirkbereich der Messerköpfe (2a; 2b) heraus bewegt wird.

Fig. 2

Printed by Xerox (UK) Business Services
2.16.7/3.6

## Beschreibung

Die Erfindung betrifft ein Verfahren und eine Vorrichtung zum Teilen einer Walzader und/oder Schneiden der Walzader in Gutader und Schrottstücke durch Schopfen und/oder Häckseln, wobei sich die Walzader mit hoher Geschwindigkeit bis wenigstens 80 m/s bewegt.

Es ist bekannt, in Walzstraßen eine bewegte Walzader mit Walzgeschwindigkeit zu teilen bzw. zu schopfen und/oder zu Häckseln, um z. B. in den nachfolgenden Walzgerüsten die Anstichbedingungen zu verbessern oder um nicht qualitätsgerechte Bereiche abzutrennen und dem Schrott zuzuführen.

In Anpassung an die hohen Walzgeschwindigkeiten werden vorzugsweise die Walzadern mittels sogenannter fliegender Scheren geschnitten, die in den verschiedensten Ausführungsvarianten offenbart sind.

Im wesentlichen bestehen diese Scheren gemäß der DD 129 127, DD 145 237 und der DD 218 852 aus zwei achsparallel angeordneten und gegensinnig rotierenden und mit mindestens je einem Messer versehenen Messerköpfen zum Schneiden der Walzader, die ihrerseits gewindeartige Kaliberrillen zur zwangsweisen Führung der Walzader in den eigentlichen Schnittbereich der Messer aufweisen.

Walzadereinlaufseitig verfügt die Schere über ein Schwenkrohr zum Einführen der Walzader in den Wirkbereich der Messerköpfe.

Eine weitere, ein Schwenkrohr aufweisende Schere ist durch das EP 0 297 313 B1 offenbart worden.

All den vorgenannten Lösungen ist gemein, daß die Schwenkrohre mittels aufwendiger mechanischer Systeme, insbesondere mittels Linearantrieben in Form von Hydraulik- oder Pneumatikzylindern oder mittels Elektromotoren, Bewegungsschnecken oder einer Kombination dieser Antriebe bedient werden.

Aufgrund der hohen Walzgeschwindigkeiten und Beschleunigungskräfte sowie der erforderlichen minimalen Schaltzeiten sind diese Systeme regelungstechnisch und mechanisch nur noch mit großem technischem Aufwand zu beherrschen.

Darüber hinaus sind die komplizierten und kostenaufwendigen gewindeartigen Kaliberbereiche der Messerköpfe durch einen hohen Verschleiß gekennzeichnet.

Hier setzt die nachfolgend beschriebene Erfindung an.

Aufgabe der vorliegenden Erfindung ist es, die Nachteile des eingangs geschilderten Standes der Technik zu vermeiden und ein Verfahren und eine Vorrichtung der gattungsbestimmenden Art zu schaffen, die unter Berücksichtigung von Walzgeschwindigkeiten bis wenigstens 80 m/s geeignet sind, das sichere Schneiden einer Walzader bei minimalem maschinentechnischem und regelungstechnischem Aufwand zu gewährleisten. Insbesondere soll auf komplizierte und kostenintensive sowie verschleiß- und störungsanfällige mechanische Systeme zur Zwangsführung der Walzader in die Schneid-Linie verzichtet und diese durch neue technologische Wirkmechanismen ersetzt werden, die der Entwicklung zu immer höheren Walzgeschwindigkeiten auch zukünftig gerecht werden.

Erfindungsgemäß wird die Aufgabe bei einem Verfahren der gattungsbestimmenden Art in Verbindung mit den Merkmalen im Oberbegriff des Anspruches 1 dadurch gelöst, daß die Walzader mittels einer senkrecht zur aktuellen Bewegungsrichtung wirkenden elektromagnetischen Kraft F derart kurzfristig und mit hoher Intensität ausgelenkt wird, daß die Walzader entweder in den Wirkbereich zwischen zwei achsparallel zueinander angeordnete und gegensinnig rotierende und mit mindestens je einem Messer versehene Messerköpfe zum Schneiden der Walzader oder aus dem Wirkbereich der Messerköpfe heraus bewegt wird.

In vorteilhafter Ausgestaltung der Erfindung ist vorgesehen, daß die elektromagnetische Kraft F durch das Fließen eines Stromes durch die Walzader, sowie eines zur Walzader in annähernd gleicher Ebene gegenübergestellten, fest angeordneten Stromleiters aufgebracht wird, die ein Auslenken der Walzader vom Stromleiter weg bewirkt.

Weiterhin ist im Sinne der Erfindung vorgesehen, daß der Zeitpunkt der Auslenkung der Walzaderspitze ausschließlich durch die Walzaderspitze selbst infolge des Schließens zweier Kontaktelektroden des Stromleiters, in Form freier Funkenentladungen, bestimmt wird und daß zum Schneiden des Walzaderendes einer Walzader oder Teilen der Walzader, dieselbe infolge des Schließens zweier Kontaktelektroden des Stromleiters derart ausgelenkt wird, daß eine Schlinge geschlagen wird, die ihrerseits in den Wirkbereich der Messerköpfe einläuft.

Ebenso wird vorgeschlagen, daß die Rotationsgeschwindigkeiten der Messerköpfe derart mit der Geschwindigkeit der sich bewegenden Walzader synchronisiert sind, daß eine Querbewegung der Walzader in einem vorher festgelegten Teilkreis mindestens eines Messerkopfes erfolgt, der so gestaltet ist, daß eine ungehinderte Querbewegung realisierbar wird.

Die Vorrichtung zur Lösung der gestellten Aufgabe ist in Kombination mit den Merkmalen im Oberbegriff des Anspruches 5 dadurch gekennzeichnet, daß

- mindestens ein Messerkopf in Rotationsrichtung gesehen, über einen dem zugehörigen Messer unmittelbar nachlaufenden durch einen Winkel α bestimmten Teilkreis verfügt, der einen derartigen radialen Sprung zum niederen aufweist, daß eine ungehinderte Querbewegung der Walzader in den Wirkbereich der Messerköpfe hinein oder aus diesem heraus realisierbar ist,

- die Einrichtungen zum Bewegen der Walzader in den Wirkbereich der Messerköpfe hinein oder aus dem Wirkbereich der Messerköpfe heraus durch zwei in annähernd gleicher Ebene gegenübergestellte, fest angeordnete Stromleiter gebildet sind und

- die beiden Stromleiter jeweils achsparallel oder zur bereichsweisen Dosierung einer elektromagnetischen Kraft F auf die Walzader in einem zweckmäßigen Winkel zur zugehörigen Bewegungsachse der Walzader angeordnet sind.

Eine vorteilhafte Weiterbildung der erfindungsgemäßen Vorrichtung sieht vor, daß jeder Stromleiter zwei Kontaktelektroden aufweist, die ihrerseits jeweils über eine Stromquelle, einen Kondensator und eine getriggerte Schaltfunkenstrecke miteinander elektrisch verbunden sind und einen solchen Abstand in der Horizontalen zur Walzader aufweisen, daß eine freie Funkenentladung zur Walzader erzeugbar ist.

Ferner wird vorgeschlagen, daß die Walzgeschwindigkeit der Walzader und die Rotationsgeschwindigkeiten der Messerköpfe derart miteinander synchronisiert sind, daß in Abhängigkeit von der Größe des Winkels $\alpha$ des radialen Sprunges und des Abstandes „f" des Stromleiters für die Bewegung der Walzader in den Wirkbereich der Messerköpfe hinein von den Messerköpfen eine ungehinderte Bewegung der Walzader sowohl in den Wirkbereich der Messerköpfe hinein als auch aus diesem heraus gewährleistet ist.

Eine Fortbildung der Erfindung sieht vor, daß der Stromleiter zur Bewegung der Walzader aus dem Wirkbereich der Messerköpfe heraus, mittels einer nahe den Messerköpfen angeordneten Kontaktelektrode über kleine Elektrodenabstände „e" oder zugeordnete Schleifkontakte kurzzeitig mit einem der beiden oder beiden Messerköpfen kontaktierbar ist.

Zweckmäßig ist weiterhin, wenn zur Gewährleistung eines sicheren Zündens der freien Funkenentladung an der Oberfläche der Walzader die Kontaktelektroden U-förmig ausgeführt sind.

Des Weiteren ist vorgesehen, daß die achsparallel zueinander in der Schneid-Linie angeordneten Messerköpfe derart in der horizontalen Ebene um einen definierten Winkel $\gamma$ zur Gutader-Linie und um einen definierten Winkel $\delta$ zur Schneid-Linie geneigt sind, daß die Schrottstücke zwischen den Schnitten sicher in Richtung einer Schrottaufnahme bewegt werden.

Die mit der Erfindung erzielten Vorteile bestehen insbesondere darin, daß auf komplizierte und aufwendige Bearbeitungen der Messerköpfe für z. B. gewindeartige Kaliberrillen und aufgrund der bisher unbekannt gebliebenen Anwendung der Bewegung der Walzader durch eine elektromagnetische Kraft F in den Wirkbereich der Messerköpfe, auf schnell bewegliche mechanischer Bauteile an sich bekannter Einrichtungen verzichtet werden kann.
Die elektrische Energie wird direkt als Wirkenergie genutzt um die Walzader in beliebig wählbaren Abschnitten derselben quer zu bewegen und anschließend mechanisch zu schneiden.
Des Weiteren wird der erforderliche Platzbedarf der Einrichtungen zum Bewegen der Walzader aufgrund der hohen Reaktionsgeschwindigkeit des elektrischen Systems als gering eingeschätzt.

Weiter Einzelheiten, Merkmale und Vorteile der Erfindung ergeben sich aus der nachfolgenden Erläuterung eines bevorzugten und in den Zeichnungen schematisch dargestellten Ausführungsbeispieles, wobei die Walzader als Walzdraht dargestellt ist.

Es zeigen:

Figur 1    eine perspektivische Darstellung der Vorrichtung in der Situation kurz vor dem Bewegen der Walzader aus der Gutader-Linie in die Schneid-Linie,

Figur 2    die Draufsicht auf die Vorrichtung nach Fig. 1,

Figur 3    die Vorrichtung nach Fig. 1 während des Schneidens der Walzader,

Figur 4    die Messergeometrie gemäß einer Seitenansicht der Messerköpfe,

Figur 5    die Vorrichtung nach Fig. 1 nach erfolgtem Schnitt der Walzader und während des Einlaufens der Gutader in die Gutader-Linie,

Figur 6    die Ansicht A nach Fig. 2 während des Treibvorganges der Walzader,

Figur 7    die Ansicht A nach Fig. 2 kurz nach dem Schnitt der Walzader,

Figur 8    die Ansicht A nach Fig. 2 während des Einlaufens der Walzader in die Gutader-Linie.

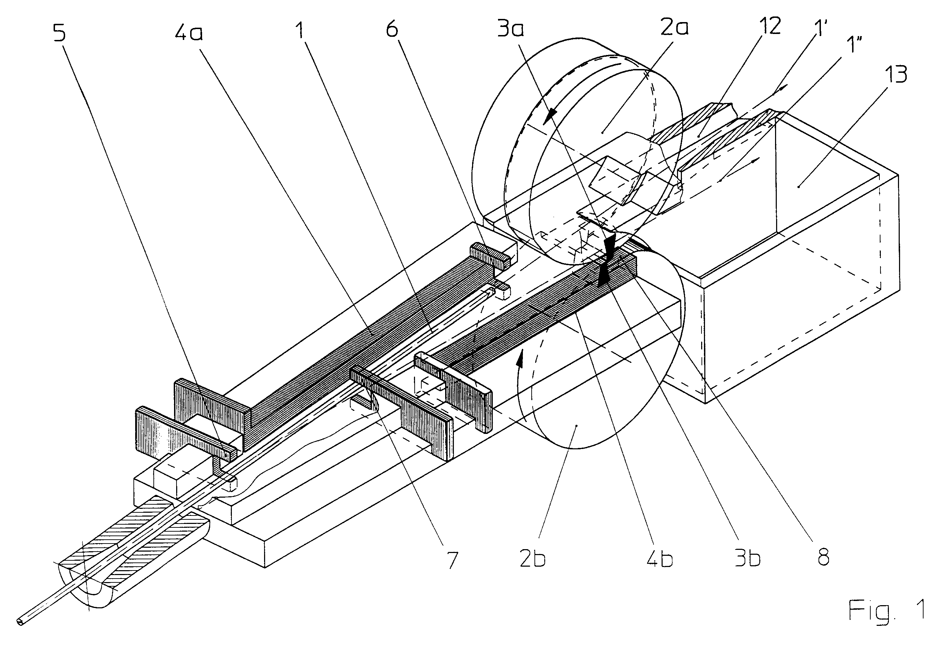

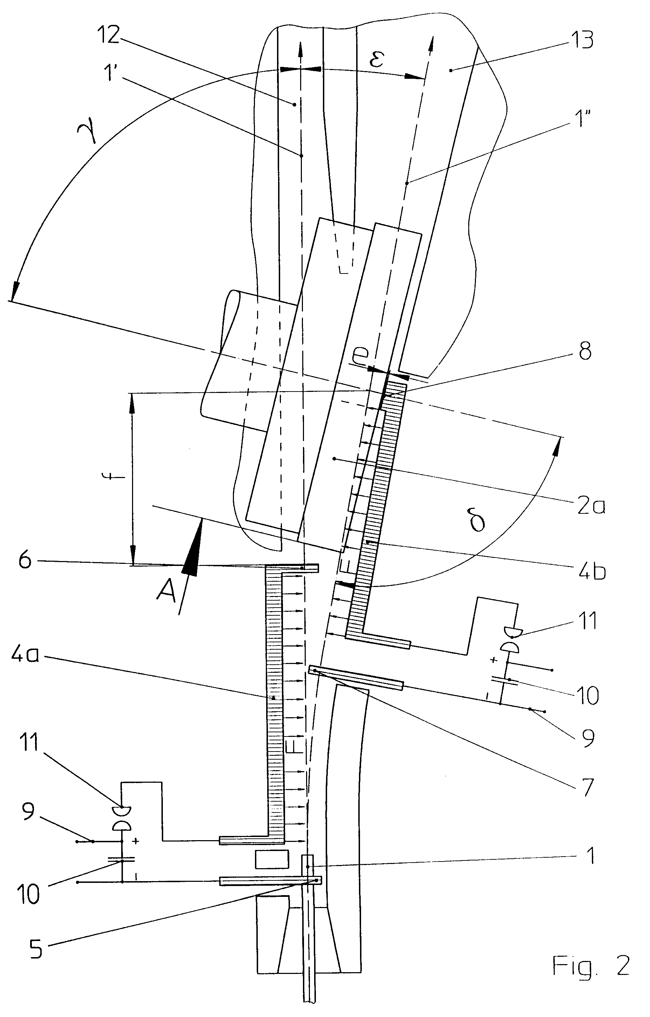

Gemäß den Figuren 1 und 2 besteht die Vorrichtung zum Teilen einer Walzader 1 und/oder Schneiden der Walzader 1 durch Schopfen und/oder Häckseln aus zwei achsparallel zueinander angeordneten und gegensinnig rotierenden Messerköpfen 2a und 2b, die ihrerseits jeweils aus zwei koaxial angeordneten und miteinander fest verbundenen Bereichen bestehen, wobei ein Bereich für den freien Durchlauf der Walzader 1 und der andere Bereich für das Treiben und Schneiden der Walzader 1 vorgesehen ist. Die genannten Bereiche sind im wesentlichen durch einen Durchmesserunterschied gekennzeichnet, wobei der Durchmesser des Bereiches für den Durchlauf der Walzader 1 so groß gewählt ist, daß die Walzader 1 im Bereich für den Durchlauf horizontal frei beweglich jedoch vertikal sicher geführt wird und im Bereich für das Treiben und Schneiden der Walzader 1 das sichere Treiben der Walzader 1 durch leichtes Andrücken derselben gewährleistet ist.

Dem Bereich der Messerköpfe 2a; 2b zum Treiben und Schneiden der Walzader 1 ist jeweils mindestens ein Messer 3a; 3b zum Schneiden der Walzader 1 zugeordnet.

In der vorliegenden bevorzugten Ausführungsform der erfindungsgemäßen Vorrichtung verfügt der obere Messerkopf 2a über das vorlaufende Messer 3a und der untere Messerkopf 2b über das nachlaufende Messer 3b, wobei diese vorgenommene Anordnung nicht zwingend erforderlich ist. Eine umgekehrte Anordnung erscheint ebenfalls für geeignet. Walzadereinlaufseitig sind den Messerköpfen 2a; 2b Einrichtungen zum Bewegen der Walzader 1 in den Wirkbereich der Messerköpfe 2a; 2b hinein oder aus diesem heraus vorgeordnet.

Diese Einrichtungen sind durch zwei in annähernd gleicher Ebene gegenübergestellte, fest angeordnete Stromleiter 4a; 4b gebildet, die jeweils achsparallel oder in einem zweckmäßigen Winkel zur zugehörigen Bewegungsachse der Walzader 1 angeordnet sind.

Die Bewegungsachse der Walzader 1 kann zum einen in der Gutader-Linie 1' oder in der Schneid-Linie 1" der Messerköpfe 2a; 2b liegen.

Jeder Stromleiter 4a; 4b verfügt über zwei Kontaktelektroden 5 und 6 bzw. 7 und 8, die ihrerseits über eine Stromquelle 9, einen Kondensator 10 und eine getriggerte Schaltfunkenstrecke 11 miteinander elektrisch verbunden sind. Der Stromleiter 4b zum Bewegen der Walzader 1 aus dem Wirkbereich der Messerköpfe 2a; 2b heraus, ist mittels seiner nahe den Messerköpfen 2a; 2b angeordneten Kontaktelektrode 8 über kleine Elektrodenabstände „e" oder nicht näher dargestellte jedoch an sich bekannte Schleifkontakte mit einem der beiden oder beiden Messerköpfen 2a; 2b kontaktierbar (Fig. 2).

Walzgutauslaufseitig sind den Messerköpfen 2a; 2b in der Gutader-Linie 1' eine Einrichtung zum Führen der Gutader 1a zur weiteren Bearbeitung in Form eines Führungskanals 12 sowie in der Schneid-Linie 1" eine Einrichtung zur Aufnahme der abgeschnittenen Schrottstücke 1b in Form einer Schrottaufnahme 13 nachgeordnet.

Nachfolgend wird die Funktion und Wirkungsweise der Erfindung näher beschrieben:

Entsprechend Figur 1 bewegt sich die Walzader 1 in die erfindungsgemäße Vorrichtung hinein und passiert dabei die Kontaktelektrode 5.

Erreicht die Walzaderspitze die Kontaktelektrode 6 und unterschreitet der Abstand zwischen Walzaderspitze und Kontaktelektrode 6 einen kritischen, für das Zünden einer Funkenentladung beim Anliegen einer zweckmäßig gewählten Hochspannung notwendigen Bereich, wird über die Schaltfunkenstrecke 11, die dann als geschlossener Schalter fungiert, der vorher aufgeladene Kondensator 10 entladen, an den Kontaktelektroden 5 und 6 kommt es zur Funkenentladung und der Stromkreis wird geschlossen. Bei einem sich als geeignet herausgestellten Elektrodenabstand zur Walzader 1 von max. 10 mm wird eine Arbeitsspannung von 10 bis 30 kV als erforderlich angesehen.

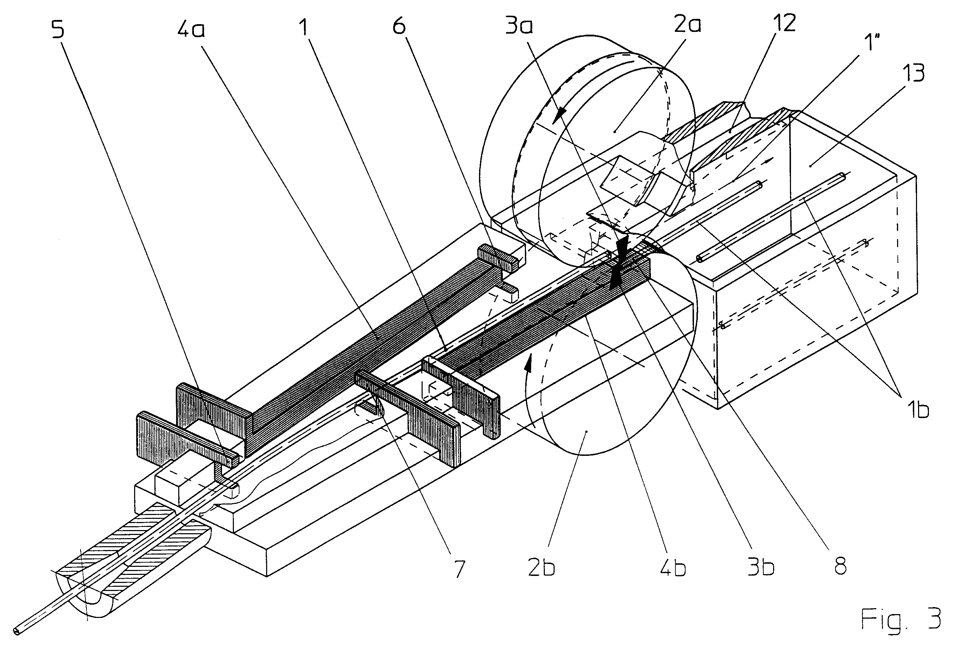

Die sowohl in der Walzader 1 als auch im Stromleiter 4a erzeugten Magnetfelder bewirken eine abstoßende elektromagnetische Kraft F (Fig. 2) auf die stromführenden Teile, die derart kurzfristig und mit hoher Intensität ein Auslenken der Walzaderspitze vom Stromleiter 4a weg bewirkt, daß dieselbe in die Schneid-Linie 1" der erfindungsgemäßen Vorrichtung einläuft (Fig. 3).

Der Zeitpunkt des Auslenkens der Walzaderspitze wird ausschließlich durch die Walzaderspitze selbst infolge des Schließens beider Kontaktelektroden 5; 6 des Stromleiters 4a bestimmt.

Zur bereichsweisen Dosierung der elektromagnetischen Kraft F auf die Walzader 1 wird es als zweckmäßig eingeschätzt, wenn der Stromleiter 4a (gleiches gilt für den nachfolgend beschriebenen Stromleiter 4b) in einem nicht näher dargestellten zweckmäßigen Winkel zur zugehörigen Bewegungsachse der Walzader 1 angeordnet ist. Des Weiteren sind die Kontaktelektroden 5 und 6 des Stromleiters 4a und die Kontaktelektrode 7 des nachfolgend näher beschriebenen Stromleiters 4b U-förmig ausgeführt, um ein sicheres Zünden der freien Funkenentladung an der Oberfläche der Walzader 1 zu garantieren.

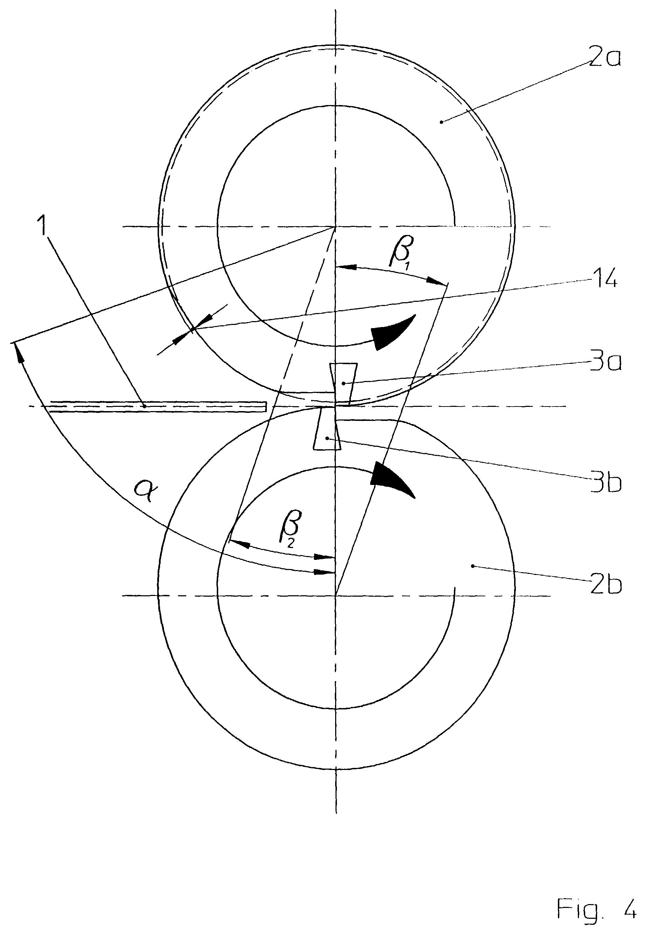

Um eine Bewegung der Walzaderspitze in den Wirkbereich der Messerköpfe 2a; 2b zu gewährleisten, verfügt, wie in Figur 4 gezeigt, mindestens ein Messerkopf, hier der obere Messerkopf 2a, in Rotationsrichtung gesehen über einen dem zugehörigen Messer, hier Messer 3a, unmittelbar nachlaufenden durch einen Winkel $\alpha$ bestimmten Teilkreis, der einen derartigen radialen Sprung 14 zum niederen aufweist, daß diese Bewegung ungehindert erfolgen kann.

Die Walzader 1 bewegt sich gemäß Figur 3 nunmehr mit der Walzaderspitze voran in der Schneid-Linie 1", wird in den Wirkbereich der Messerköpfe 2a und 2b eingeführt und durch dieselben zum Schneiden aufgenommen. In dieser Situation erfolgt mittels der Messerköpfe 2a; 2b ein Treiben der Walzader 1.

Jeder Messerkopf 2a; 2b verfügt, wie oben schon beschrieben, über wenigstens ein auf dem Umfang desselben fest angeordnetes Messer 3a; 3b.

Um ein sicheres Abscheren der Walzader 1 in der Schnittebene zu gewährleisten, ist gemäß Figur 4 dem vorlaufenden Messer 3a des oberen Messerkopfes 2a in Rotationsrichtung gesehen ein Freischnitt im Umfangsbereich $\beta_2$ nachgeordnet. Dem nachlaufenden Messer 3b des unteren Messerkopfes 2b ist dagegen in Rotationsrichtung gesehen ein Freischnitt im Umfangsbereich $\beta_1$ vorgeordnet.

Die Summe der Winkel $\alpha$ und $\beta_1$ bestimmt in Abhängigkeit von der Walzgeschwindigkeit die Zeit, in der die Walzader 1 nicht von den Messerköpfen 2a; 2b getrieben wird.

Aus Versuchen und der Praxis hat sich ergeben, daß ein Winkel $\alpha$ zwischen 60° und 90° als geeignet einzuschätzen ist.

Die Winkel $\beta_1$ und $\beta_2$ werden durch die Dicke der Walzader 1 (Durchmesser) und dem Durchmesser der Messerköpfe 2a; 2b bestimmt. Beispielsweise werden bei Messerköpfen 2a; 2b mit einem Durchmesser von ca. 200 mm und einem Walzaderdurchmesser von 5,5 mm

Winkel $\beta_1$ und $\beta_2$ von jeweils 20° sowie bei einem Walzaderdurchmesser von 20 mm Winkel $\beta_1$ und $\beta_2$ von jeweils 40° empfohlen.

Die Walzader 1 wird nachfolgend aufgrund der Rotationsbewegung der Messerköpfe 2a; 2b und der zueinander wirkenden Messer 3a; 3b beliebig oft geschnitten und die Schrottstücke 1b, hier Häckselstücke, fallen in eine Schrottaufnahme 13, die hier als einfacher oben offener Behälter dargestellt ist.

Zu bevorzugen ist eine Schrottaufnahme 13 mit einem Zyklon in bekannter Bauweise und einem darunter angeordneten Schrottbehälter.

Als vorteilhaft wird angesehen, wenn die zueinander achsparallel in der Schneid-Linie 1'' angeordneten Messerköpfe 2a; 2b derart in der horizontalen Ebene um einen definierten Winkel $\gamma$ zur Gutader-Linie 1' und um einen definierten Winkel $\delta$ zur Schneid-Linie 1'' geneigt sind (Fig. 2), daß die Schrottstücke 1b zwischen den Schnitten sicher in Richtung der Schrottaufnahme 13 bewegt werden.

Die Winkel $\gamma$ und $\delta$ ergeben sich aus der Funktion der erfindungsgemäßen Vorrichtung. Der Winkel $\gamma$ errechnet sich aus dem vorgegebenen Schrottablenkwinkel $\epsilon$ und dem Treibausgleichswinkel $\delta$ nach der Gleichung:

$$\gamma = (90° - \epsilon) - (90° - \delta)$$

$\delta$ liegt im bevorzugten Bereich von 1° bis 2° und gleicht durch eine Korrektur der Transportrichtung die Zeit aus, in der die Walzader 1 nicht mittels der Messerköpfe 2a; 2b getrieben wird.

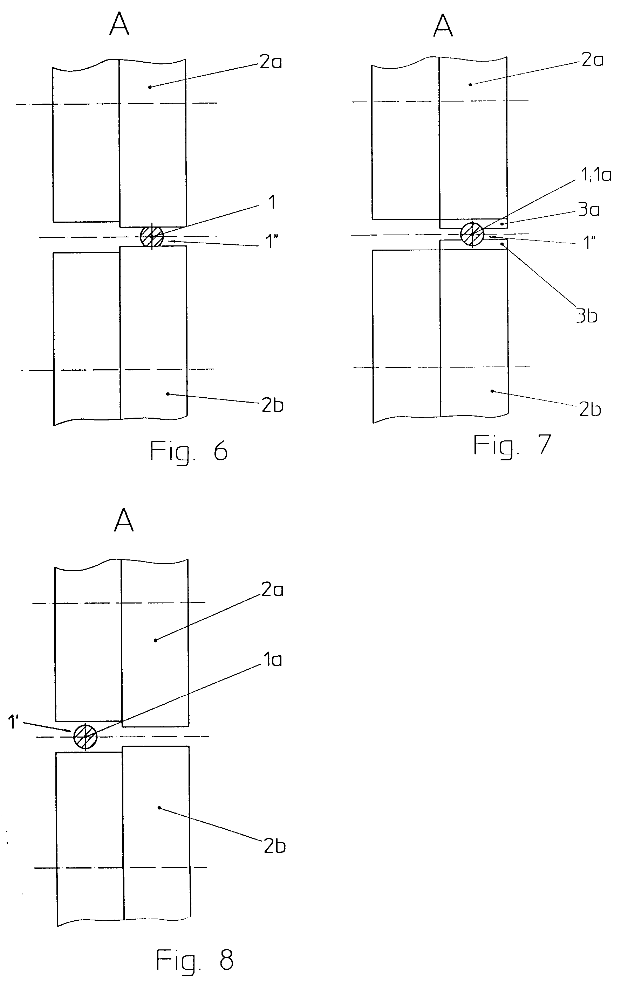

In Figur 6 wird die Situation des Treibvorganges zwischen den einzelnen Trennschnitten gezeigt, wobei die Walzader 1 zwischen den Messerköpfen 2a; 2b geklemmt ist.

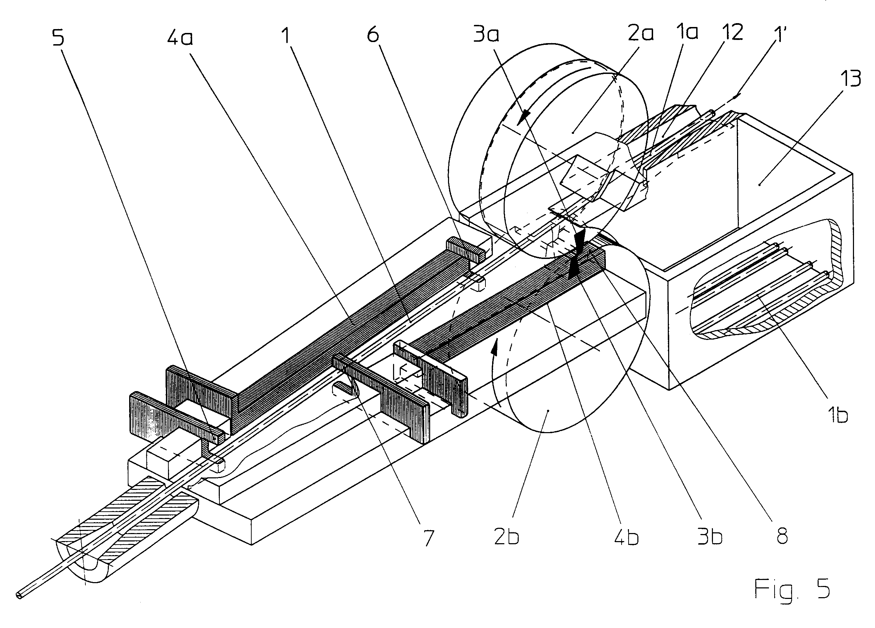

Nachdem die vorgewählte Länge der Walzaderspitze als Schrottstück 1b abgetrennt wurde, wird, wie in Figur 2 gezeigt, der Stromleiter 4b synchronisiert mit der Stellung des radialen Sprunges 14 des Messerkopfes 2a aktiviert, indem eine zweckmäßige Hochspannung angelegt wird, die in ihrer Wirkung vergleichbar mit dem Stromleiter 4a ein derartiges Auslenken der Spitze der Gutader 1a vom Stromleiter 4b weg bewirkt, daß dieselbe in die Gutader-Linie 1' der erfindungsgemäßen Vorrichtung einläuft (Fig. 5). Das Auslenken der Gutader 1a erfolgt dabei im Bereich des oben bereits beschriebenen radialen Sprunges 14 des oberen Messerkopfes 2a.

In Figur 7 wird die Situation kurz nach dem Schnitt gezeigt. Die Walzader 1 ist aufgrund des radialen Sprunges 14 nicht mehr zwischen den Messerköpfen 2a; 2b geklemmt und kann demgemäß frei in horizontaler Richtung bewegt werden.

Figur 8 zeigt den Zeitpunkt, bei dem die Gutader 1a zwischen den oben erwähnten Bereichen der Messerträger 2a, 2b für den freien Durchlauf in die Gutader-Linie 1' geführt ist.

Des Weiteren ist darauf aufmerksam zu machen, daß die Walzgeschwindigkeit der Walzader 1 und die Rotationsgeschwindigkeiten der Messerköpfe 2a; 2b derart miteinander synchronisiert sind, vorzugsweise rechnergesteuert, daß in Abhängigkeit von der Größe des Winkels $\alpha$ des radialen Sprunges 14 und des Abstandes „f" des Stromleiters 4a von den Messerköpfen 2a; 2b eine ungehinderte Bewegung der Walzader 1 sowohl in den Wirkbereich der Messerköpfe 2a; 2b hinein als auch aus diesem heraus gewährleistet ist.

Für das Teilen einer Walzader 1 und/oder das Abschneiden eines Endes der Walzader 1 wird der Stromleiter 4a derart wie vorbeschrieben aktiviert, daß eine Schlinge in die Walzader 1 geschlagen wird (nicht dargestellt), die dann in die Schneid-Linie 1'' einläuft und geschnitten werden kann.

Das Ende der Gutader 1a wird anschließend in die Gutader-Linie 1' gezogen. Das abgeschnittene Ende der Walzader 1 wird als Schrottstück 1b, durch die Messerköpfe 2a; 2b getrieben, in Richtung Schrottaufnahme 13 befördert.

## Patentansprüche

1. Verfahren zum Teilen einer Walzader und/oder Schneiden der Walzader in Gutader und Schrottstücke durch Schopfen und/oder Häckseln wobei sich die Walzader mit hoher Geschwindigkeit bis wenigstens 80 m/s bewegt,
   **dadurch gekennzeichnet, daß**

   die Walzader (1) mittels einer senkrecht zur aktuellen Bewegungsrichtung wirkenden elektromagnetischen Kraft F derart kurzfristig und mit hoher Intensität ausgelenkt wird, daß die Walzader (1) entweder in den Wirkbereich zwischen zwei achsparallel zueinander angeordnete und gegensinnig rotierende und mit mindestens je einem Messer (3a; 3b) versehene Messerköpfe (2a; 2b) zum Schneiden der Walzader (1) oder aus dem Wirkbereich der Messerköpfe (2a; 2b) heraus bewegt wird.

2. Verfahren nach Anspruch 1,
   **dadurch gekennzeichnet, daß**

   die elektromagnetische Kraft F durch das Fließen eines Stromes durch die Walzader (1), sowie eines zur Walzader (1) in annähernd gleicher Ebene gegenübergestellten, fest angeordneten Stromleiters (4a) oder (4b) aufgebracht wird, die ein Auslenken der Walzader (1) vom Stromleiter (4a) oder (4b) weg bewirkt.

3. Verfahren nach Anspruch 1 und 2,
   **dadurch gekennzeichnet, daß**

   der Zeitpunkt der Auslenkung der Walzaderspitze ausschließlich durch die Walzaderspitze selbst infolge des Schließens zweier Kontaktelektroden (5, 6) oder (7, 8) des Stromleiters (4a) oder (4b), in Form freier Funkenentladungen, bestimmt wird und daß zum Schneiden des Walzaderendes einer Walzader (1) oder Teilen der Walzader (1) dieselbe infolge des Schließens zweier Kontaktelektroden (5, 6) des Stromleiters (4a) derart ausgelenkt wird, daß eine Schlinge geschlagen wird, die ihrerseits in den Wirkbereich der Messerköpfe (2a; 2b) einläuft.

4. Verfahren nach wenigstens einem der Ansprüche 1 bis 3,
**dadurch gekennzeichnet, daß**

die Rotationsgeschwindigkeiten der Messerköpfe (2a; 2b) derart mit der Geschwindigkeit der sich bewegenden Walzader (1) synchronisiert sind, daß eine Querbewegung der Walzader (1) in einem vorher festgelegten Teilkreis mindestens eines Messerkopfes (2a) erfolgt, der so gestaltet ist, daß eine ungehinderte Querbewegung realisierbar wird.

5. Vorrichtung zum Teilen einer Walzader und/oder Schneiden der Walzader in Gutader und Schrottstücke durch Schopfen und/oder Häckseln, wobei sich die Walzader mit hoher Geschwindigkeit bis wenigstens 80 m/s bewegt, bestehend aus zwei in einer Schneid-Linie achsparallel zueinander angeordneten und gegensinnig rotierenden, mit mindestens je einem Messer versehenen Messerköpfen zum Schneiden der Walzader, wobei ein Messerkopf das vorlaufende und der andere Messerkopf das nachlaufende Messer aufweist, aus walzadereinlaufseitig angeordneten Einrichtungen zum Bewegen der Walzader in den Wirkbereich der Messerköpfe hinein oder aus diesem heraus in eine Gutader-Linie sowie aus walzaderauslaufseitig angeordneten Einrichtungen zum Führen der Gutader zur nachgeordneten Bearbeitung und zur Aufnahme der Schrottstücke,
**dadurch gekennzeichnet, daß**

- mindestens ein Messerkopf (2a) in Rotationsrichtung gesehen, über einen dem zugehörigen Messer (3a) unmittelbar nachlaufenden durch einen Winkel α bestimmten Teilkreis verfügt, der einen derartigen radialen Sprung (14) zum niederen aufweist, daß eine ungehinderte Querbewegung der Walzader (1) in den Wirkbereich der Messerköpfe (2a; 2b) hinein oder aus diesem heraus realisierbar ist,
- die Einrichtungen zum Bewegen der Walzader (1) in den Wirkbereich der Messerköpfe (2a; 2b) hinein oder aus dem Wirkbereich der Messerköpfe (2a; 2b) heraus durch zwei in annähernd gleicher Ebene gegenübergestellte, fest angeordnete Stromleiter (4a; 4b) gebildet sind und

- die beiden Stromleiter (4a; 4b) jeweils achsparallel oder zur bereichsweisen Dosierung einer elektromagnetischen Kraft F auf die Walzader (1) in einem zweckmäßigen Winkel zur zugehörigen Bewegungsachse der Walzader (1) angeordnet sind.

6. Vorrichtung nach Anspruch 5,
**dadurch gekennzeichnet, daß**

jeder Stromleiter (4a; 4b) zwei Kontaktelektroden (5, 6; 7, 8) aufweist, die ihrerseits jeweils über eine Stromquelle (9), einen Kondensator (10) und eine getriggerte Schaltfunkenstrecke (11) miteinander elektrisch verbunden sind und einen solchen Abstand in der Horizontalen zur Walzader (1) aufweisen, daß eine freie Funkenentladung zur Walzader (1) erzeugbar ist.

7. Vorrichtung nach Anspruch 5 und 6,
**dadurch gekennzeichnet, daß**

die Walzgeschwindigkeit der Walzader (1) und die Rotationsgeschwindigkeiten der Messerköpfe (2a;2b) derart miteinander synchronisiert sind, daß in Abhängigkeit von der Größe des Winkels α des radialen Sprunges (14) und des Abstandes „f" des Stromleiters (4a) für die Bewegung der Walzader (1) in den Wirkbereich der Messerköpfe (2a; 2b) hinein von den Messerköpfen (2a; 2b) eine ungehinderte Bewegung der Walzader (1) sowohl in den Wirkbereich der Messerköpfe (2a; 2b) hinein als auch aus diesem heraus gewährleistet ist.

8. Vorrichtung nach Anspruch 5 und 6,
**dadurch gekennzeichnet, daß**

der Stromleiter (4b) zur Bewegung der Walzader (1) aus dem Wirkbereich der Messerköpfe (2a, 2b) heraus, mittels einer nahe der Messerköpfe (2a; 2b) angeordneten Kontaktelektrode (8) über kleine Elektrodenabstände „e" oder zugeordnete Schleifkontakte kurzzeitig mit einem der beiden oder beiden Messerköpfen (2a; 2b) kontaktierbar ist.

9. Vorrichtung nach wenigstens einem der Ansprüche 5 bis 8,
**dadurch gekennzeichnet, daß**

zur Gewährleistung eines sicheren Zündens der freien Funkenentladung an der Oberfläche der Walzader (1), die entsprechenden Kontaktelektroden (5, 6) des Stromleiters (4a) und die Kontaktelektrode (7) des Stromleiters (4b) U-förmig ausgeführt sind.

10. Vorrichtung nach wenigstens einem der Ansprüche 5 bis 9,
**dadurch gekennzeichnet, daß**

die achsparallel zueinander in der Schneid-Linie (1") angeordneten Messerköpfe (2a; 2b) derart in der horizontalen Ebene um einen definierten Winkel $\gamma$ zur Gutader-Linie (1') und um einen definierten Winkel $\delta$ zur Schneid-Linie (1") geneigt sind, daß die Schrottstücke (1b) zwischen den Schnitten sicher in Richtung einer Schrottaufnahme (13) bewegt werden.

Fig. 1

EP 0 945 205 A1

Fig. 2

Fig. 3

Fig. 4

Fig. 5

Fig. 6

Fig. 7

Fig. 8

EP 0 945 205 A1

Europäisches Patentamt

**EUROPÄISCHER RECHERCHENBERICHT**

Nummer der Anmeldung

EP 99 10 5820

| | **EINSCHLÄGIGE DOKUMENTE** | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
| X<br><br>A | US 2 401 639 A (HAWTHORNE)<br>4. Juni 1946 (1946-06-04)<br>* Spalte 2, Zeile 24 - Spalte 6, Zeile 57;<br>Abbildungen 1-16 *<br>_____ | 1<br><br>5 | B23D33/02<br><br><br><br><br>RECHERCHIERTE<br>SACHGEBIETE (Int.Cl.6)<br><br>B23D |

Der vorliegende Recherchenbericht wurde für alle Patentansprüche erstellt

| Recherchenort | Abschlußdatum der Recherche | Prüfer |
|---|---|---|
| DEN HAAG | 13. Juli 1999 | Berghmans, H |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.............................................................
& : Mitglied der gleichen Patentfamilie, übereinstimmendes Dokument

EPO FORM 1503 03.82 (P04C03)

14

**ANHANG ZUM EUROPÄISCHEN RECHERCHENBERICHT
ÜBER DIE EUROPÄISCHE PATENTANMELDUNG NR.**

EP 99 10 5820

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-07-1999

| Im Recherchenbericht angeführtes Patentdokument | Datum der Veröffentlichung | Mitglied(er) der Patentfamilie | Datum der Veröffentlichung |
|---|---|---|---|
| US 2401639 A | 04-06-1946 | KEINE | |

Für nähere Einzelheiten zu diesem Anhang : siehe Amtsblatt des Europäischen Patentamts, Nr. 12/82